Europäisches Patentamt

European Patent Office

Office européen des brevets

(19)

(11) Publication number : **0 507 752 A2**

# (12) EUROPEAN PATENT APPLICATION

(21) Application number : **92830167.0**

(22) Date of filing : **03.04.92**

(51) Int. Cl.[5] : **G01N 21/41,** G01B 11/06,
G01F 23/28

(30) Priority : **05.04.91 IT RM910230**

(43) Date of publication of application :
**07.10.92 Bulletin 92/41**

(84) Designated Contracting States :
**DE FR GB NL**

(71) Applicant : **ENTE PER LE NUOVE
TECNOLOGIE, L'ENERGIA E L'AMBIENTE (
ENEA)
125 Viale Regina Margherita
I-00198 Roma RM (IT)**

(72) Inventor : **Annunziato, Mauro
Via Tazio Nuvolari 210
I-00142 Rome (IT)**
Inventor : **Manzi, Giovanni
Via Casetta Mattei 69/8
I-00148 Rome (IT)**
Inventor : **Presaghi, Massimo
Via San Secondo 36
I-00166 Rome (IT)**
Inventor : **Romanello, Francesco
Via S.Giovanna Elisabetta 38/A
I-00159 Rome (IT)**
Inventor : **Sica, Michele
Via delle Rose 18
I-00061 Anguillara Sabazia (Rome) (IT)**

(74) Representative : **Sarpi, Maurizio
Studio FERRARIO Via Collina, 36
I-00187 Roma (IT)**

(54) **Apparatus for measuring and monitoring fluidodynamic parameters in two-phase mixtures.**

(57) An apparatus for instantaneously measuring fluidodynamic parameters in two-phase mixtures including an optical fibre probe having a measuring point of capillary diameter associated to a high-intensity emitter of pulsed infrared light, and a photodetector sensing the back infrared light of the probe and cooperates with a digital circuit adapted to eliminate multiple countings due to noise over the signal so as to allow measurements, monitorings and controls both in the experimental and industrial fields.

FIG.2

EP 0 507 752 A2

The present invention relates to the field of the measurement and/or control apparatus and more particularly concerns an apparatus for measuring instantaneously and point by point the fluid (liquid and gaseous) phase in two-phase mixtures, especially as far as the quantitative aspect is concerned.

At the present state of art several apparatus are known both in the Patent field and in the literature which are intended to carry out a variety of measurements and analysis of the two-phase mixtures such as the vacuum fraction, size and dynamic characteristics of bubbles, drops, plugs and liquid films, and generally the downflow conditions.

Said known apparatus make use of physical quantities such as conductivity or electrical capacitance (resistive probes, impedance probes, capacitive probes), thermal conductivity (heated thermocouple probes), or refractive index (optical probes).

One cited apparatus is the object of Italian Patent Application No. 24448/81 filed on 12.10.1981 by the same Applicant of the present invention et al. and is intended to detect qualitatively the air/water interface downstream of the steam separator. Even if such apparatus is adapted to the prefixed purpose, it could not be used for a quantitative measurement of the vacuum fraction and the other above mentioned measurements for different reasons. First of all the insertion factor of the measuring point was too high for differentiating small size separation areas and considerably modified the fluid streams during the measurement. Furthermore signal/noise ratio was too small and did not allow the signal levels associated to the different (liquid or gaseous) phases to be easily differentiated.

A first object of this invention is of providing an apparatus of the above mentioned kind for carrying out besides a quantitative and more precise measurement of the vacuum degree also the measurement of static and dynamic levels and the thickness of liquid films as well as the characteristics of bubbles and drops (size, speed and concentration) even in environments affected by electromagnetic noise.

Another object of this invention is of providing an apparatus of the cited type which can be interfaced to central data collection and microprocessor systems and/or directly to computer systems.

Yet another object of this invention is of providing an optical fibre probe of the above mentioned kind having a low introduction factor of the measuring point so as to reduce to a minimum the changes in the fluid streams during the measurement and to differentiate smaller and smaller separation areas.

These objects are achieved according to the invention by an apparatus including a photosensitive optical fibre probe, an infrared emitter (LED) and relative infrared receiver (photodiode) provided with power supply means of the LED and preamplifier means for the signals from the photodiode, an electronic digital device for eliminating multiple countings due to noise covering the signal, and coupling means connected to even remote microprocessor systems and/or computer systems.

The sensing head of the probe is interchangeable with other heads having different shapes. The optical fibre is preferably of the synthetic type with a polymethyl methacrylate core coated by a special fluorite having a lower refractive index and forming the cladding, and is enclosed in a steel sheath of capillary size from which it projects only with its bent portion forming the sensitive area. The seal between the optical fibre and the metallic coating is provided by a polymerized filler of two-component epoxy resin having a coefficient of thermal expansion corresponding to that of the metallic coating. Such solution allows the probe to be subjected even for short time to temperatures of about 100°C with an operating temperature of about 80°C under a pressure of 20 bar.

Further features and advantages of the invention will be more readily apparent from the following detailed description with reference to the accompanying drawings showing by way of illustrative and non-limitative example a preferred embodiment of the invention.

In the drawings:

Fig. 1 shows a schematic view of a rectilinear optical probe in the atmosphere;

Figs. 1A and 1B show schematic views of a U-shaped light conductor (fibre optics) in the atmosphere and under water, respectively;

Fig. 2 is a block diagram of the measurement apparatus according to the invention;

Figs. 3 and 4 show the optical probe and three different types of sensors to be used with the same;

Fig. 5 is the detail of a sensor viewed in axial section and in enlarged scale;

Fig. 6 shows the electronic circuit of the pre-amplifier of the probe;

Fig. 7 shows the electronic circuit of the signal processing unit of the exchange;

Fig. 8 shows the analog signals and the respective digital signals under a particular operating condition;

Fig. 9 shows further analog signals and the respective digital signals under another operating condition.

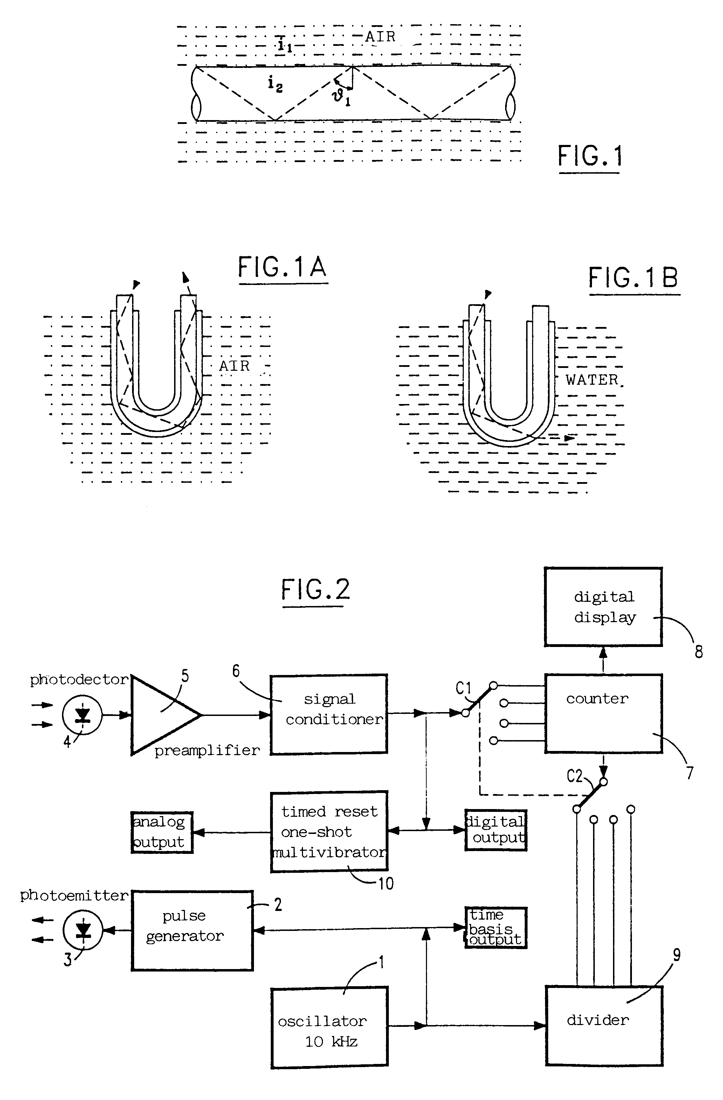

With reference to Fig. 1 the light from a light source propagates within the fibre by successive reflections on the wall of the same. In case of a rectilinear probe the smallest reflection angle $\theta_1$ is a function of the two refractive indexes $i_1$ and $i_2$ relative to the air and the transparent coating material of the probe. When the latter operates in the atmosphere, there are no perceptible dispersion of light as the refractive index of the atmosphere is lower than that of the transparent coating body.

Even if the probe is U-shaped (Fig. 1A) and operates in the atmosphere the light penetrates and comes out of the probe practically without any change. On the contrary, when the probe is dipped in a liquid, for example water, a dispersion is provided at the bend of the pipe as shown in Fig. 1B: accordingly, the amount of light hitting a photodetector at the end of the optical fibre is lower, thus allowing a change at such end to be detected.

The apparatus according to the invention operating on the basis of the above mentioned principle is shown in Fig. 2.

The light source is formed of an infrared LED 3 supplied with pulsed current. Oscillator 1 has the double function of supplying photoemitter 3 with a pulsed signal through pulse generator 2, and counter 7 with the signal for starting and stopping the counting time. After having passed through the optical fibre of the probe the light hits photodetector 4 formed of a photodiode which generates a signal.

Preamplifier 5 provides for increasing the level of the signal generated by photodetector 4 before it is fed to signal conditioner 6, thus limiting interferences induced by outer noise sources and sensed along the sensor/exchange connection.

Block 6 is provided for discriminating significant signals from spurious signals. Counter 7 is servo-controlled by divider 9 and allows the vaccum degree to be displayed by digital display 8 or to be transmitted through an analog output.

Switch 11 formed of two sections C1 and C2 provides for measuring the vacuum degree during four different data collection times (integration). Timed reset one-shot multivibrator 10 has the function of generating on the basis of the signal from block 6 a signal having similar characteristics as the physical phenomenon appearing in the measure environment.

Oscillator 1 supplies block 2 with an input current at 10 kHz.

In operation, the light after having passed through the optical fibre hits photodiode 4 causing the latter to generate a signal which is then amplified by preamplifier 5 and conditioned by conditioner 6 so as to start the counting in block 7.

Switch 11 selects in its four positions the integration time for measuring the vacuum degree which is displayed in percentage by the display. In other words the value between 0 and 100 displayed by digital display 8 indicates the percentage of the readout time during which the sensor has been exposed to the atmosphere. The suitable selection of the switch position is depending on the type of detection which should be carried out:
- short time        = detection of thermodynamic instability;
- long time         = detection of the average value of the vacuum degree.

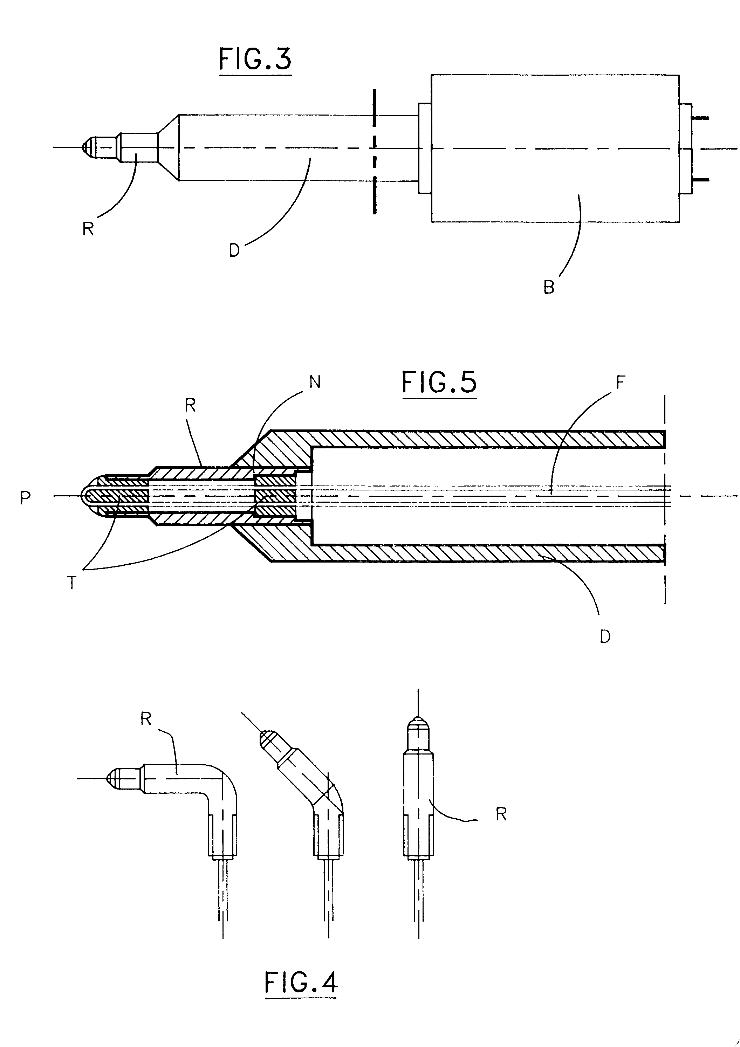

The shape of the sensor is a function of the type of detection which should be carried out and the operation environment. In Fig. 4 three types of sensors are shown: right angle sensor, obtuse angle sensor and rectilinear sensor, respectively.

In Figs. 3 and 5 there are shown the structural details of a probe including an optical fibre F inserted in an outer envelope R ending with a sensing point P and provided with a thread N for the connection to a straight bored pipe D which can be sealed for the connection to the system. Such pipe D receives also a dipolar head B for the optical connection to LED 3 and photodiode 4.

Outer envelope R is formed of a little steel pipe which is suitably worked out and shaped according to the form of the head. The sealing means T between the sensing portion and the envelope is formed of an epoxy two-component resin as described herebelow.

The used optical fibre is of the synthetic type: core is made of polymethyl methacrylate coated with special fluorite having lower refractive index and forming the cladding. Such fibres can be subjected for short time to temperatures of about 100°C, the operating temperature being about 80°C, and assure a perfect stability of the basic optical characteristics between such limit temperature and the lower limit temperature of -30°C.

In order that the sensing point withstands the very strong impacts after being dipped into a two-phase fluid formed of air and water fed at high speeds, the fibre is received in a filler of a two-component epoxy resin after being inserted into the metallic envelope. Such resin is fed into the envelope in a fluid state so that only a very little portion of the folded fibre projects from the envelope. Once the resin is polymerized, thus forming a tight bond between fibre and envelope, the point of the fibre projecting from the envelope should not be longer than two times the diameter of the fibre. The sensing head is shaped by the same epoxy resin as shown in Fig. 4 in order to avoid backwater of drops due to surface tension.

The thermal expansion coefficient of the resin should conveniently correspond to that of the metallic envelope.

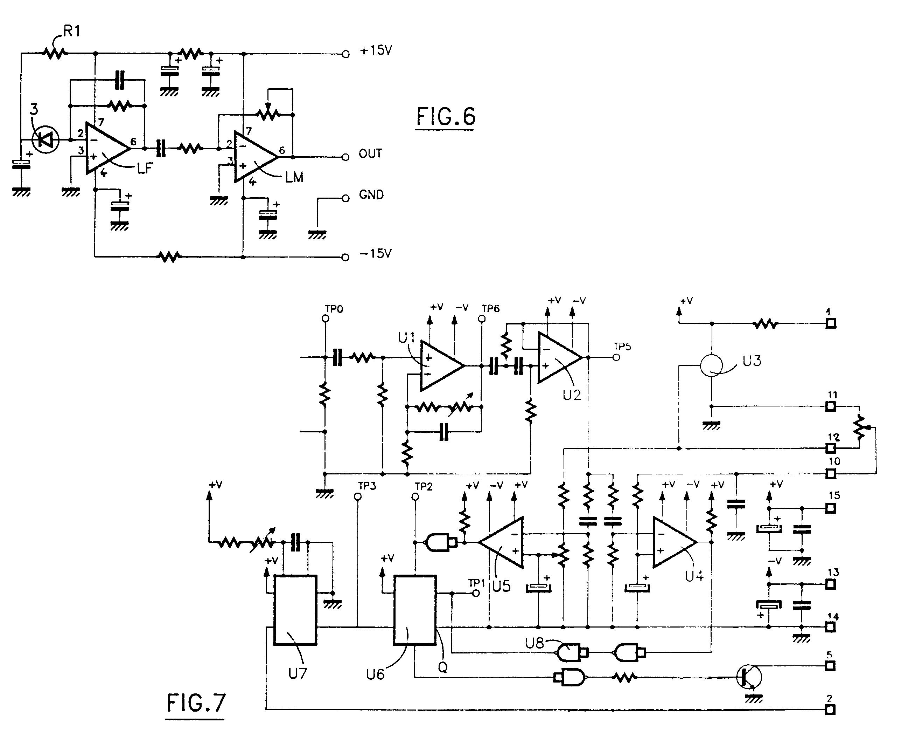

Some circuit diagrams of the apparatus are shown with reference to Figs. 6 and 7.

Fig. 6 shows the electronic preamplifying circuit of the probe.

The signal generated by photodiode 3 and pre-amplified by two successive stages LF and LM causes through R1 a potential difference.

Integrated circuit U1 is biased so as to amplify up to 30 times such potential difference, which is sufficient to assure operating conditions such as to provide "strong" signals free from any saturation. U2 is a high-pass filter which is intended to "block" those signal components having frequencies between zero and about 200 Hz. The selection of such frequency range is due to the fact that it includes the most of spurious signals collected by the probe:

- indoor light      = 100 Hz
- sunlight      = d.c.
- ground signal      = 50 Hz

The output signal of U2 is compared by U4 with a voltage Vx previously selected by the operator during the calibration.

The output signal has two levels corresponding to two operating conditions of the sensing point. Comparator U4 outputs a logic state "1" in case of voltage signals lower than Vx.

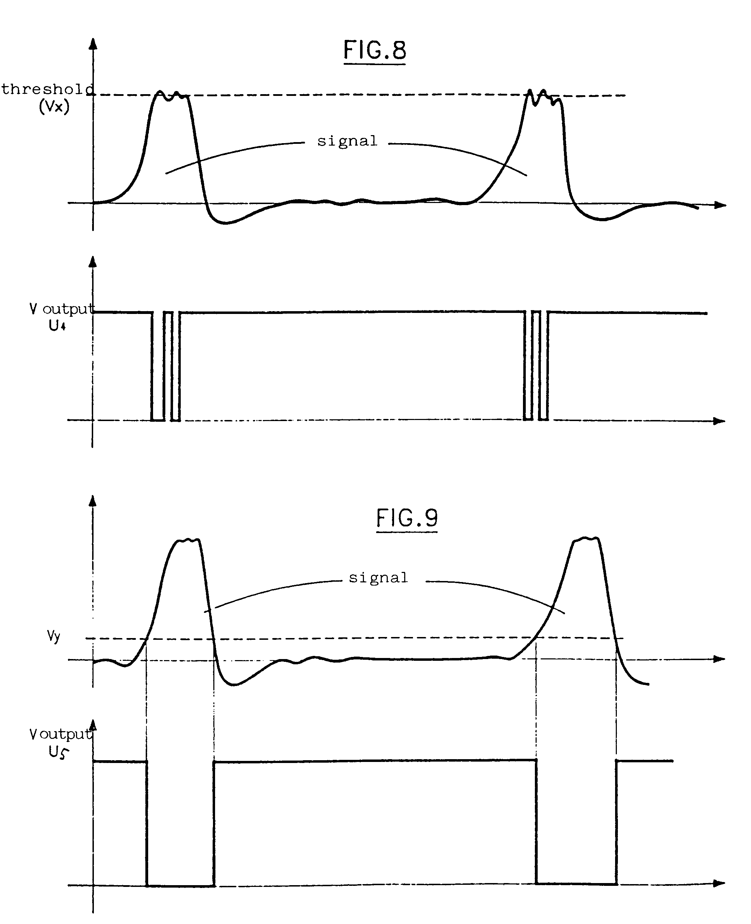

Under particular calibration conditions selected in order to increase the sensitivity of the apparatus, reference voltage Vx can assume a value comparable with the signal to be processed. In that case there is provided an output having a logic state affected by the electronic noise caused by the system components. In other words, under the above mentioned operating conditions U4 does not output any signal as long as it receives a signal from the photodiode. Such phenomenon causes the comparator U4 to transform "n" input pulses into "n+x" output pulses (Fig. 8).

In order to eliminate the effects caused by such spurious activation of the comparator the electronic circuit is provided with a digital filter.

The digital filter is formed of one of the two flip-flops contained within integrated circuit U6 which feds through its output "Q" an energizing signal to the counter displaying the vacuum degree. The change of the logic state at the output "Q" is conditioned both by the logic state at the output of U4 and the reference logic state from a second comparator U5. The latter integrated circuit operates like U4 but with a very lower threshold voltage Vy (Vy << Vx) so as to cause its logic state to change to "0" as the signal to be processed overcomes the noise voltage (Fig. 9).

The signals from comparator U5 and U4 cause the logic states at the output "Q" of U6 to change to "1" and "0", respectively. The above described operating sequence is performed to achieve such purpose.

Integrated circuit U5 operates to actuate the flip-flop of U6 only during the time periods in which a signal from the sensor is received and only when the signal overcomes voltage Vx causing the output of U4 to change to logic state "0".

According to a feature of the invention, the electronic circuit further includes a device for providing an output having a logic state "1" or "0" according to the operating conditions of the sensor when the latter is exposed to the atmosphere or dipped in water, respectively. Such signal is standardized to an amplitude of 15 V.

The mentioned device is formed of an integrated circuit U7 used as timed reset one-shot multivibrator.

The output signal from U7 can promote analysis for detecting flow-patterns. Integrating circuit U8 is used as driver or inverting driver to meet the circuit requirements.

The above described apparatus is adapted to a large range of applications among which the following employments are mentioned by way of example:

a) Measurement of the level or layer of a mono-phase fluid or a two-phase mixture both under static and dynamic conditions (level of tanks, layers in tanks or two-phase reservoirs, layers of fluids in races).

b) Measurements of the vacuum degree in liquid-gas mixtures and the water cut in hydrocarbon pipelines.

c) Measurement of the oil content in fuel or thermal carrier fluid conducts (motor vehicles, aerospace vectors).

d) Measurement of the thickness of liquid films forming the interface between the liquid and gas phases.

e) Measurement of the flow rate, size of bubbles or drops a.s.o.

f) Detection of downflow and flow pattern conditions in horizontal channels or upright columns containing gas-liquid mixtures (air/water, Freon, hydrocarbons, a.s.o.).

The present invention has been illustrated and described according to a preferred embodiment thereof, however, it should be understood that construction modifications can be made without departing from the scope of the present industrial invention.

## Claims

1. An apparatus for instantaneously detecting fluidodynamic parameters in a two-phase mixture by the use of the refraction of a light radiation propagating through an optical fibre having a bent portion at the measurement area, characterized in that it includes in combination photoemitter means associated to an optical probe, photodetector means receiving the light signal through said probe, and an electronic control unit supplying said photoemitter means, processing the signal generated by said photodetector means and displaying and/or transferring said signal to microprocessor systems or computer systems.

2. The apparatus as claimed in claim 1, characterized in that the probe has an interconnecting base or socket to which the sensing body is connected by threading or other plug-in system.

3. The apparatus as claimed in claims 1 and 2, characterized in that the used optical fibre has a core of polymethyl methacrylate and a cladding of fluorite having a lower refractive index.

4. The apparatus as claimed in claims 1 to 3, characterized in that the sensing portion of the probe is formed of a tubular, rectilinear or angled body of capillary size from which a little portion of the optical fibre having a bent top projects, the optical fibre being embedded in a polymerized epoxy resin layer sealing said tubular body at both ends and also shaping the point thereof

5. The apparatus as claimed in the preceding claims, characterized in that the epoxy resin is a two-component resin having a thermal expansion coefficient corresponding to that of said tubular body.

6. The apparatus as claimed in the preceding claims, characterized in that the portion of the fibre projecting from the tubular body is not as long as two times the diameter of the fibre.

7. The apparatus as claimed in the preceding claims, characterized in that said photoemitter means is a light emitting diode (LED) and the photodetector means is a photodiode, both diodes being of the high-sensitivity infrared ray type.

8. The apparatus as claimed in the preceding claims, characterized in that the LED is supplied and the signals from the photodiode are preamplified according to the electromagnetic compatibility.

9. The apparatus as claimed in the preceding claims, characterized in that said electronic control unit includes an electronic digital device adapted to eliminate multiple countings caused by noise over the signal when the latter has a low level. which can hardly be differentiated.

10. The apparatus as claimed in the preceding claims, characterized in that the coupling system between control unit and data collection unit allows microprocessor systems and computer systems to be directly or remote connected.

FIG.1

FIG.1A

FIG.1B

FIG.2

## FIG.3

R

D

B

## FIG.5

N

R

F

P

T

D

R

R

## FIG.4

FIG.7

FIG.6

## FIG.8

threshold
(Vx)

signal

V output
U4

## FIG.9

signal

Vy

V output
Uς